(19) Europäisches Patentamt
European Patent Office
Office européen des brevets

(11) Publication number: **0 011 377**
**A1**

(12) # EUROPEAN PATENT APPLICATION

(21) Application number: 79302186.6

(22) Date of filing: 11.10.79

(51) Int. Cl.³: **G 01 J 3/46**
**G 01 N 21/55**

(30) Priority: 13.10.78 US 951149

(43) Date of publication of application:
28.05.80 Bulletin 80/11

(84) Designated Contracting States:
CH DE FR GB IT

(71) Applicant: Tobias, Philip Emanuel
1872 Watson Road
Abington, Pennsylvania 19001(US)

(72) Inventor: Tobias, Philip Emanuel
1872 Watson Road
Abington, Pennsylvania 19001(US)

(74) Representative: Michaels, Peter Albert
34 Marsh Road
Pinner, Middlesex HA5 5NQ(GB)

(54) **Photoelectric densitometer head.**

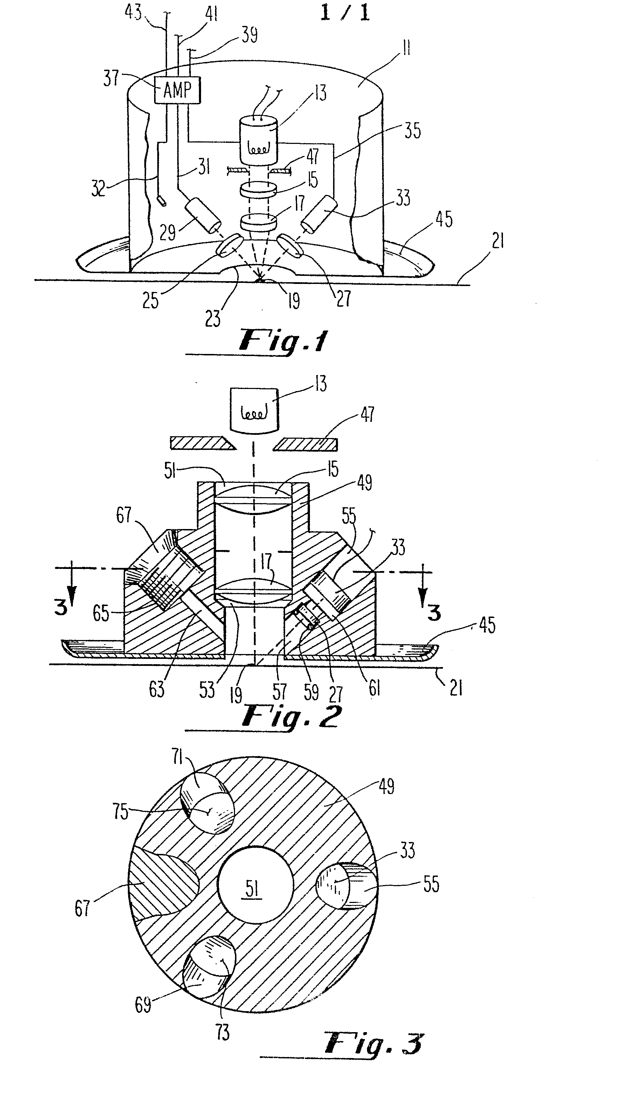

(57) An optical densitometer head adapted for application to automatic equipment, and not requiring manual adjustment of filters, comprises a housing (11) including a light source (13), a lens system (15,17) and three photo-electric devices (29,33), each with its own colour filter (25, 27). Infra-red filters may be included. The outputs from the devices may be applied to a three-channel amplifier (37) with a characteristic so as to give outputs corresponding to the densities of the three primary colours. The devices may be symmetrically disposed in the housing, and an inspection aperture, normally closed by a plug (not in Figure 1) may be provided.

Fig.1

-1-

Optical Densitometer Head

This invention relates to optical densitometer heads.

Optical densitometers are well known in the graphic arts and are generally used to determine the optical density of a colour swatch or an area of a sheet of material which is characterized by one of the basic colours cyan, magenta, or yellow. In the prior art, such optical densitometers have been static densitometers and have usually comprised a light source, a rotatable colour light filter means, and a photo sensitive device. The user knew what colour he was examining and therefore rotated the correct light filter into position and then moved the densitometer to a position to focus the white light on the colour swatch or area of the sheet to be examined. The light of course was reflected from the swatch and read by the photo sensitive device to provide an electrical signal indicative of the optical density being read.

An object of the present invention is to provide a densitometer head more adapted to automatic operation. In particular, the densitometer head of the present invention does not require manual manipulation of filters and is adaptable to automatic operation in a scanning mode, as is described in my pending U.S. patent application No. 951 444 filed on 13 October 1978, and in the European patent application claiming priority therefrom and filed on the same date as this application.

The densitometer head of the present invention has a housing with a central light source, the light from which is focused by a lens system at a point just beyond the base of the housing. The head is used to detect the colour of a colour swatch being monitored and to do this the light is focused on a point on the swatch. Part of the light is absorbed by the swatch (the particular colour of the light absorbed depends on the colour of the swatch) and part of the remainder of the light is reflected through an opening in the base of the housing into three angularly disposed apertures, each containing a colour light filter, an infra red light filter, and a photo sensitive device. The colour light filters respectively pass only red, green and blue light.

Accordingly, if the swatch being monitored is a swatch of cyan coloured ink, a relatively large amount of the reflected light would pass through the filters which are designed to pass green or blue light because the green or blue light would not be absorbed by the cyan swatch. However, very little of the reflected light would pass through the filter which is designed to pass red light, because much of the red light would be absorbed by the cyan swatch. By properly connecting electronic signal amplifiers to the photo sensitive devices (to provide a large output signal in response to a small input signal) the small signal generated by the photo sensitive device coupled to the red filter would result in a large output signal from the associated amplifier indicating that cyan was being viewed.

The housing preferably also has a fourth angularly formed aperture therein through which the user can view whether or not the focused spot of white light is striking the swatch or area to be monitored.

A densitometer head according to the present invention will be further described with reference to the accompanying drawings, in which

Figure 1 is a schematic diagram of the head,

Figure 2 is a cross section of a part of the head, showing two oblique apertures, and

Figure 3 is a cross section through Figure 2 at line 3-3.

Figure 1 shows a housing 11 which is shown broken away to show the elements disposed therein. Inside the housing 11 is a white light source 13. In the preferred embodiment, the white light source is a bulb manufactured by General Electric and identified as a lens end iodine cycle bulb, although other types of bulb may be used. Located below the light source 13 are two lenses 15 and 17 which direct the light from the source 13 to a focal point 19 just below the base of the housing 11. In Figure 1, light at the focal point 19 is shown striking the sheet of paper 21 whereon the colour swatch, or colour area to be monitored, is located.

-3-

Part of the white light is absorbed by the swatch on the paper 21 and a portion is reflected back through the opening 23 of the housing 11. Part of the reflected light entering the opening 23 is directed to three colour light filters, two of which, 25 and 27, are shown in Figure 1. The third colour light filter is not shown in Figures 1 and 2, but lies outward from the plane of the drawing; its position can be appreciated from Figure 3.

Let us assume that filter 27 is a red filter to block all light but red light and let us assume that there is a swatch of cyan coloured ink at point 19 on the paper 21. Under these conditions the red component of the white light from the source 13 would be absorbed to a great extent by the cyan swatch. The absorption depends on the optical density of the swatch colour, which in turn is related to the thickness of the ink.

The green and blue components of the white light will not be absorbed by the cyan swatch, so they are both reflected in large measure. If we assume that the filter 25 is a green filter to block all light but green light, then both the reflected blue and reflected red are blocked by filter 25 and only the green light passes therethrough. Since there was no green light absorbed by the cyan swatch, there is a great deal of green light striking the photo-sensitive device 29 and hence a large output signal on line 31. The output signal on line 32 from the photo sensitive device to which the blue light is reflected is also substantially high. However, the reflected red light passing through filter 27 to the photo sensitive device 33 is much less, and it provides a small output signal on line 35. However, the amplifier circuit 37 responds to a low input signal to provide a high output signal on line 39, and responds to high signal inputs to provide low output signals on lines 41 and 43.

A magenta swatch would absorb green light and a yellow swatch would absorb blue light, so obviously if the swatch had been magenta, the high signal would have been on line 41 and if the swatch had been yellow the high output signal would have been on line 43.

Accordingly the present densitometer head provides input signals to a logic system which indicate that the colour swatch which is being scanned is of cyan colour and has an optical density whose value is proportional to the amplitude of the signal on line 39.

Now if the swatch under consideration had been black, then the signals on lines 39, 41 and 43 would have been substantially equal. This is because the colour black absorbs almost equal amounts of red, green and blue light from white light.

As can be seen in Figure 1, a baffle 45 is secured to the base of the housing 11 to keep extraneous light from entering the system and generating spurious signals. Figures 1 and 2 also show an aperture 47 which limits the spread of the light, directing it toward the lens system, and this helps prevent spurious signals from being generated by the photo-sensitive devices.

Figure 2 is a cross section of part of the housing 11 with two oblique apertures therein. This figure shows a metal portion 49 into which there has been cut a central aperture 51 with a taper at the location 53 and that the opening extends completely to the bottom of the section 49, and is matched by an opening in baffle 45.

On the right hand side of the section 49 there is formed an oblique aperture 55. In the lower section 57 of the aperture is a colour light filter 27. In the preferred embodiment this is a gelatine coloured filter, manufactured by Eastman Kodak Company and identified as a Wratten filter. The colour filter 27 is held in position by an "O" ring 59, which is easily removable to change the colour filter 27 if that is desired.

As seen in Figure 2, the colour filter 27 is followed by an infra red filter 61, which blocks the infra red light passed by the filter 27. The photo-sensitive device 33 is shown inserted in the aperture 55 and lying next to the infra red filter 61.

It should be understood that the other two oblique apertures have similar arrangements of colour light filters, infra red filters and photo sensitive devices, with each colour light filter being held in place by an "O" ring.

On the left-hand side of the section 49 is shown an oblique aperture 63 which enlarges into a threaded aperture 65, closed by a plug 67. When the plug 67 is removed, the user can look down along the aperture 63 to see if the light spot is at point 19. The plug of course is normally kept in place to prevent light passing down the aperture 63 and producing spurious signals.

Figure 3 shows a cross section along line 3-3 of Figure 2. In Figure 3 the metal portion 49 is shown, together with the central aperture 51. The photo-sensitive device 33 and the plug 67. In addition, in Figure 3, the other oblique apertures, 69 and 71, are also shown with photo-sensitive devices 73 and 75 therein. Each holds a colour filter, an infra-red filter and respectively the photo-sensitive devices 73 and 75 in an arrangement similar to that shown in Figure 2 for aperture 55. In the preferred embodiment the apertures 55, 69 and 71 lie in planes 120$^o$ apart.

## CLAIMS

1.    An optical densitometer head comprising a housing (11) in which are mounted a white light source (13), lens means (15, 17) arranged to focus light from the source on to a colour area, a photo-sensitive device (33) receiving light from the area, and colour filter means (27) between the area and the photo-sensitive device, characterised in that three such photo-sensitive devices (33, 73, 75) are disposed in the housing (11), each having a fixed colour filter (25, 27, not shown) adapted to pass respectively green, red and blue light from the area, so that the outputs from the photo-sensitive devices give simultaneous measures of the densities of the colours magenta, cyan and yellow at the area.

2.    An optical densitometer head according to claim 1 further including a three-channel amplifier (37), the output of the photo-sensitive devices (33, 73, 75) being connected by lines (35, 32, 31) each to one input of the amplifier, and the amplifier characteristics being such that a low input signal produces a high signal at the output (39, 41, 43) of its channel representing the density of the respective colour.

3.    An optical densitometer according to claim 1 or claim 2 in which an infra-red filter (61 etc.) is included between the colour area and each photo-sensitive device.

4.    An optical densitometer according to any preceding claim in which the photo-sensitive devices (33, 73, 75) and their filters are disposed in apertures (55, 69, 71) lying in planes $120^{\circ}$ apart.

5.    An optical densitometer according to claim 4 provided with a further aperture (63, 65) allowing inspection of the focussed light spot (19) at the colour area, the aperture being normally closed by a removable plug (67).

*Fig.1*

*Fig.2*

*Fig.3*

## DOCUMENTS CONSIDERED TO BE RELEVANT

| Category | Citation of document with indication, where appropriate, of relevant passages | Relevant to claim |
|---|---|---|
| X | DE - A - 2 225 222 (IPC) <br> + Page 2; pages 7-9; claims 8,9; figures 3,4 + <br><br> & CH-A-543 733 & GB-A-1 385 195 <br> -- | 1,2 |
| X | US - A - 3 512 893 (E. I. DU PONT) <br> + Column 3, lines 16-75 + <br> -- | 1 |
| A | CH - A5 - 576 130 (GREENWOOD MILLS) <br> + Main claim; claim 1 + <br> -- | 1-4 |
| A | US - A - 3 846 027 (ALIGN-O-TRON) <br> + Column 2, lines 25-68; column 3, lines 1-3; claims 5,16; fig. 4,5 + <br> -- | 1-3 |
| A | DD - A - 90 875 (BOEHRINGER) <br> + Column 2, lines 18-30; column 3, lines 1-37 + <br> -- | 1 |
| A | US - A - 3 885 878 (THE RESEARCH ASSOCIATION OF BRITISH POINT, COLOUR) <br> + Column 2, lines 45-68; columns 2,3 + <br><br> & DE-A-2 101 818 & CH-A-536 487 <br> -- | 1-4 |
| A | US - A - 4 033 698 (INTERNATIONAL BUSINESS MACHINES CORPORATION) <br> + Totality + <br><br> & DE-B-2 636 420 <br> ---- | 1-4 |

### CLASSIFICATION OF THE APPLICATION (Int. Cl.) 3

G 01 J  3/46
G 01 N 21/55

### TECHNICAL FIELDS SEARCHED (Int.Cl.) 3

G 01 J  3/00
G 01 N 21/00

### CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| X | The present search report has been drawn up for all claims |
|---|---|

| Place of search | Date of completion of the search | Examiner |
|---|---|---|
| VIENNA | 23-01-1980 | GRONAU |

EPO Form 1503.1  06.78